(19) Europäisches Patentamt
European Patent Office
Office européen des brevets

(11) **EP 3 718 777 B1**

(12) **EUROPÄISCHE PATENTSCHRIFT**

(45) Veröffentlichungstag und Bekanntmachung des Hinweises auf die Patenterteilung:
**19.01.2022   Patentblatt 2022/03**

(21) Anmeldenummer: **19166754.2**

(22) Anmeldetag: **02.04.2019**

(51) Internationale Patentklassifikation (IPC):
**B41J 11/00** *(2006.01)*      **G02B 19/00** *(2006.01)*
**B05D 3/06** *(2006.01)*      **B41M 7/00** *(2006.01)*
**B41F 23/04** *(2006.01)*      **B05D 1/26** *(2006.01)*
**G02B 5/00** *(2006.01)*

(52) Gemeinsame Patentklassifikation (CPC):
**B41J 11/00214; B41J 11/00218; G02B 5/005;**
**G02B 19/0014; G02B 19/0061; G02B 19/0095;**
B05D 1/26; B05D 3/067

(54) **VORRICHTUNG ZUM HÄRTEN VON UV-TINTE AUF EINEM BEDRUCKSTOFF**

DEVICE FOR HARDENING UV INK ON A PRINTING SUBSTRATE

DISPOSITIF DE DURCISSEMENT D'UNE ENCRE UV SUR UN MATÉRIAU À IMPRIMER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.10.2020   Patentblatt 2020/41**

(60) Teilanmeldung:
**21212468.9**

(73) Patentinhaber: **Heidelberger Druckmaschinen AG 69115 Heidelberg (DE)**

(72) Erfinder:
• **Hachmann, Dr. Peter**
  **69469 Weinheim-Hohensachsen (DE)**
• **Korkut Punckt, Dr. Sibel**
  **76297 Stutensee (DE)**
• **Hauptmann, Dr. Gerald**
  **69245 Bammental (DE)**

(56) Entgegenhaltungen:
EP-A1- 3 239 763        JP-A- 2004 212 536
US-A1- 2005 190 248      US-A1- 2006 066 703
US-A1- 2013 286 060

**Beschreibung**

Die Erfindung betrifft eine Vorrichtung zum Härten von UV-Tinte auf einem Bedruckstoff mit den Merkmalen von Anspruch 1 oder Anspruch 2.

Technisches Gebiet und Stand der Technik

Die Erfindung liegt auf dem technischen Gebiet der grafischen Industrie und dort insbesondere im Bereich des industriellen, d.h. hochproduktiven Tintendrucks (Inkjet) auf flache Substrate, d.h. des Auftragens und Trocknens oder Härtens von flüssiger Tinte auf bogen- oder bahnförmige Bedruckstoffe, bevorzugt aus Papier, Karton, Pappe, Kunststoff oder Verbundmaterial.

Das Auftragen flüssiger Tinte erfolgt bei dem bekannten DOD-Tintendruckverfahren (drop-on-demand), indem ein Druckbild auf einem flachen Bedruckstoff erzeugt wird, wobei ein Tintendruckkopf (kurz: Kopf) mit einzeln ansteuerbaren Düsen dem zu druckenden Bild entsprechend feinste Tintentropfen, bevorzugt im Pikoliter-Bereich, erzeugt und diese berührungslos als Druckpunkte auf den Bedruckstoff überträgt. Das Ansteuern der Düsen kann mittels Piezoaktoren erfolgen.

Das Härten von Druckfluiden (allgemeiner: Beschichtungsfluiden) auf Substraten, insbesondere von polymerisierbaren Druckfarben, Lacken oder Tinten auf Papier, Karton oder Kunststofffolie, kann durch ein Beaufschlagen des aufgebrachten Fluids mit elektromagnetischer Strahlung erzielt werden, insbesondere durch Ultraviolett- bzw. UV-Strahlung. Dabei wird das Fluid bzw. wenigstens dessen polymerisierbare Anteile polymerisiert.

Zur Verbesserung der Trocknungsleistung der eingesetzten Trockner und insbesondere zur Fokussierung der abgegebenen Strahlung ist es bereits bekannt, die Trockner mit Linsen zu bestücken.

Die WO 03/096387 A2 offenbart ein LED-Curing-System u.a. zur Photopolymerisation von Tinten mit Mikrolinsen zur Ausrichtung der Strahlung auf einen Öffnungswinkel kleiner 5°. Die JP 2012-096377 (A) offenbart ein ähnliches System.

Bei den bekannten Systemen können Probleme auftreten, z.B. im Weiteren beschriebenen Mattierungeffekte.

Beim Trocknen von UV-Tinte mit UV-Strahlung wurde folgendes Problem erkannt: Wird das Zwischenhärten der UV-Tinte bzw. das sogenannte Pinnen, mit einer zu geringen Leistung durchgeführt, so ist das Pinnen nicht ausreichend und die Tinte bzw. die Tintentropfen zerfließen nach dem Pinnen in unerwünschter Weise. Wird dagegen mit höherer Leistung gepinnt, so kann ein unerwünschtes Mattieren der Tinte auftreten. Durch das Mattieren nehmen der Glanz und damit auch die Qualität des Druckproduktes ab. Weiterhin kann das Problem auftreten, dass beim Pinnen mit zu hoher Leistung zu viel Streulicht auf Düsenflächen benachbarter Druckköpfe gelangt und dort zu einem Anhärten von Tinte führt, so dass die Druckköpfe öfter gereinigt werden müssen oder im Extremfall ausfallen. Zudem kann das Problem auftreten, dass beim Drucken von ausgedehnten Weiß-Vollflächen und bei deren Pinnen eine Faltenbildung hervorgerufen wird, welche auf das starke Erwärmen des Bedruckstoffs beim Pinnen von in Weiß-Vollflächen üblichen dicken Tintenschichten zurückzuführen ist.

Die EP 3 239 763 A1 offenbart eine Licht emittierende Vorrichtung mit einer Vielzahl an LED und diesen zugeordneten Linsen, wobei der Abstrahlwinkel begrenzt ist.

Die US 2006/0066703 A1 offenbart eine Bild erzeugende Vorrichtung mit Quellen zum Erzeugen von härtender Strahlung und diesen zugeordneten Lochblenden.

Die US 2013/0286060 A1 offenbart eine Vorrichtung zum Härten mit UV-Strahlung mit Lampen zum Pinnen und diesen zugeordneten Lochblenden, deren Öffnungen veränderbar sind.

Die US 2005/0190248 A1 offenbart ähnliche eine Bild erzeugende Vorrichtung.

Aufgabe

Es ist daher eine Aufgabe der Erfindung, eine gegenüber dem Stand der Technik verbesserte Vorrichtung zu schaffen, welche es insbesondere ermöglicht, unerwünschte, weil störende Mattierungseffekte beim Härten (Vorhärten bzw. Pinnen und/oder Enthärten) von UV-härtbaren flüssigen Medien, insbesondere UV-Tinten, bevorzugt von schwarzen Tinten, zu verringern oder gar zu vermeiden.

Erfindungsgemäße Lösung

Diese Aufgabe wird erfindungsgemäß durch eine Vorrichtung mit der Merkmalskombination von Anspruch 1 und eine Vorrichtung mit der Merkmalskombination von Anspruch 2 gelöst. Vorteilhafte und daher bevorzugte Weiterbildungen der Erfindung ergeben sich aus den Unteransprüchen sowie aus der Beschreibung und den Zeichnungen. Die Merkmale der Erfindung, der Weiterbildungen der Erfindung und der Ausgangsbeispiele zur Erfindung stellen auch in Kombination miteinander vorteilhafte Weiterbildungen der Erfindung dar.

"Bedruckstoff" meint im Rahmen dieser Anmeldung flache Substrate, welche unbedruckt und für das Bedrucken vorgesehen sind oder bereits bedruckt und für das weitere Bedrucken oder weitere Verarbeiten, insbesondere Falzen, vorgesehen sind. "Bedruckstoff" meint insbesondere flache Substrate in Form von Bogen oder Bahnen im Wesentlichen aus den Materialien Papier, Karton, Pappe, Wellpappe, Kunststoff oder Metall, insbesondere Kunststofffolie oder Metallfolie, oder in Form von Etiketten im Wesentlichen aus den Materialien Papier oder Kunststoff, insbesondere auf einer TrägerBahn, oder in Form von Bahnen im Wesentlichen aus den Materialien Naturfaser oder Kunstfaser, insbesondere Textil-Bahnen wie z.B. Gewebe-Bahnen. Der Bedruckstoff wird bevorzugt für den Akzidenz-, Etiketten- und/oder Verpackungsdruck verwendet.

Eine - eine erste Variante bildende - erfindungsgemäße Vorrichtung zum Härten von UV-Tinte auf einem Bedruckstoff, umfassend eine Mehrzahl M1 von Strahlern (12), welche als UV-LED-Strahlungsquellen ausgebildet sind, wobei die Vorrichtung eine Mehrzahl M2 von optischen Elementen (15) umfasst, welche derart ausgebildet und angeordnet sind, dass der jeweilige maximale Abstrahlwinkel $\alpha_{max}$ der Strahler auf $\alpha_{max} \leqq 30$ ° begrenzt wird, und die Vorrichtung (10) einen ersten Trockner (8) zum Zwischenhärten der Tinte umfasst, wobei die Mehrzahl M1 von Strahlern (12) und die Mehrzahl (M2) von optischen Elementen (15) dem ersten Trockner (8) zugeordnet sind, und wobei die Strahler (12) im Wesentlichen in einer ersten Ebene (11) angeordnet sind, die Strahler (12) in der ersten Ebene (11) benachbart zueinander angeordnet sind, und die optischen Elemente (15) im Wesentlichen in einer zur ersten Ebene (11) parallelen, zweiten Ebene (14) angeordnet sind, zeichnet sich dadurch aus, dass die optischen Elemente (15) als Lochblenden ausgebildet sind und in der zweiten Ebene (14) ein Lochblenden-Array (23) bilden, wobei gilt: M2 > M1 und wobei jedem Strahler (12) mehrere Lochblenden (15) zugeordnet sind und wobei die Lochblenden (15) innenwandig jeweils mit einem Blaze-Gitter (28) versehen sind.

Eine - eine zweite Variante bildende - erfindungsgemäße Vorrichtung zum Härten von UV-Tinte auf einem Bedruckstoff, umfassend eine Mehrzahl M1 von Strahlern (12), welche als UV-LED-Strahlungsquellen ausgebildet sind, wobei die Vorrichtung eine Mehrzahl M2 von optischen Elementen (15) umfasst, welche derart ausgebildet und angeordnet sind, dass der jeweilige maximale Abstrahlwinkel $\alpha_{max}$ der Strahler auf $\alpha_{max} \leqq 30$ ° begrenzt wird, und die Vorrichtung (10) einen ersten Trockner (8) zum Zwischenhärten der Tinte umfasst, wobei die Mehrzahl M1 von Strahlern (12) und die Mehrzahl (M2) von optischen Elementen (15) dem ersten Trockner (8) zugeordnet sind, und wobei die Strahler (12) im Wesentlichen in einer ersten Ebene (11) angeordnet sind, die Strahler (12) in der ersten Ebene (11) benachbart zueinander angeordnet sind, und die optischen Elemente (15) im Wesentlichen in einer zur ersten Ebene (11) parallelen, zweiten Ebene (14) angeordnet sind, zeichnet sich dadurch aus, dass die optischen Elemente (15) als Lochblenden ausgebildet sind und in der zweiten Ebene (14) ein Lochblenden-Array (23) bilden, wobei gilt: M2 = M1 und wobei jedem Strahler (12) genau eine Lochblende (15) zugeordnet ist, und wobei i) die Lochblenden (15) jeweils einen Durchmesser D und eine Tiefe T aufweisen und die zweite Ebene (14) einen Abstand d1 von der ersten Ebene (11) aufweist, derart, dass für einen Abstrahlwinkel $\alpha$ gilt: $\tan(a) = \left( \dfrac{D/2}{d1 + T/2} \right)$, und/oder ii) dass die Lochblenden (15) innen jeweils mit Strukturen (28) versehen sind, welche das Begrenzen des maximalen Abstrahlwinkels $\alpha_{max}$ unterstützen

Die Erfindung ermöglicht es in vorteilhafter Weise, störende Mattierungseffekte zu verringern oder gar zu vermeiden.

Die erfindungsgemäße Vorrichtung bzw. deren Nutzung verhindert, dass Strahlen mit einem Winkel $\alpha$ (gegen das Lot) von mehr als 30 ° auf den Bedruckstoff bzw. die aufgedruckte Tinte gelangen. Solche Strahlen würden nicht "tief" in die Tintenschicht eindringen und daher an deren Oberfläche eine Art "Haut" bilden. In umfangreichen Untersuchungen wurde erkannt, dass gerade eine solche Hautbildung zumindest mit verantwortlich (wenn nicht ursächlich) für die störende Mattierung ist.

Es treffen somit bevorzugt nur Strahlen in einem Winkelbereich zwischen 0° und 30° und zwischen 0° und -30° (gemessen gegen eine Senkrechte auf dem Bedruckstoff) auf den Bedruckstoff, auch wenn der Strahler Strahlen erzeugt, welche unter größeren Winkeln abgestrahlt werden. Letztere gelangen nicht oder nur unter verändertem, auf 30° begrenztem Winkel auf den Bedruckstoff. Der maximale Abstrahlwinkel $\alpha_{max}$ der Strahler kann somit als der maximale Winkel aufgefasst werden, unter dem Strahlen auf den Bedruckstoff auftreffen.

Mit der erfindungsgemäßen Lösung gelingt es jedoch in vorteilhafter Weise, lediglich diejenigen Strahlen zu nutzen, welche ausreichend tief in die Tintenschicht eindringen, keine störende "Haut" an der Oberfläche der zu härtenden Tinte zu erzeugen und somit störende Mattierungseffekte zu reduzieren oder gar zu verhindern.

Neben dem Vorteil, eine störende Mattierung zu reduzieren oder gar zu verhindern, ergibt sich auch der zusätzliche Vorteil, dass weniger Streulicht erzeugt wird und daher auch weniger Verunreinigungen oder Beschädigungen der benachbarten Druckköpfe zu erwarten sind. Hieraus ergibt sich der ebenfalls zusätzliche Vorteil, dass Trockner zum Pinnen näher an den benachbarten Druckköpfen platziert werden können und infolgedessen Bauraum in der Druckmaschine eingespart werden kann.

Insgesamt ergibt sich als Vorteil der Erfindung auch eine Kostenreduktion bei gleichzeitiger Herstellung hochqualitativer Druckprodukte.

Weiterbildungen der Erfindung

Bevorzugte Weiterbildungen der Erfindung können sich durch eine oder mehrere (auch miteinander kombinierten) der nachfolgend aufgelisteten Merkmalskombinationen auszeichnen:
Die Strahler sind im Wesentlichen in einer ersten Ebene angeordnet. Die erste Ebene kann parallel zum zu behandelnden Bedruckstoff liegen.
Die Strahler sind in der ersten Ebene benachbart zueinander angeordnet. Die Strahler können direkt benachbart zueinander angeordnet sein, d.h. ohne dazwischen befindliche weitere Komponenten. Die Strahler können auf einer Platine angeordnet sein. Die Strahler können eine (z.B. wechselbare) Einheit bilden.
Die optischen Elemente sind im Wesentlichen in einer zur ersten Ebene parallelen zweiten Ebene angeordnet. Die zweite Ebene kann parallel zum zu behandelnden Bedruckstoff liegen. Die optischen Elemente können zwischen den Strahlern und dem Bedruckstoff angeordnet sein, insbesondere in Form von Lochblenden oder Linsen. Die Strahler können zwischen den optischen Elementen und dem Bedruckstoff angeordnet sein, insbesondere in Form von Spiegeln.
Die optischen Elemente sind in der ersten Variante als Lochblenden ausgebildet und in der zweiten Ebene ein Lochblenden-Array bilden, wobei gilt M2 > M1 und wobei jedem Strahler mehrere Lochblenden zugeordnet sind. Die Lochblenden des Array können ein hexagonales Raster bilden. Zum Beispiel können jeden Strahler 2, 3, 4, 5, 6 oder 7 Lochblenden zugeordnet sein. Einzelne Lochblenden oder jede Lochblende können mehreren Strahlern zugeordnet sein. Bei einer solchen Lösung ergibt sich der Vorteil, dass der Abstand zwischen den LEDs und den Lochblenden eine große Toleranz aufweisen kann und dass folglich die Herstellung kostengünstig erfolgen kann.
Das Lochblenden-Array kann als ein mit Bohrungen versehenes Blech ausgebildet sein.
Das Blech kann mit einer Absorptionsschicht zur Absorption von Strahlung der Strahler versehen sein.
Das Blech kann an einem Rahmen angeordnet sein, welcher wenigstens ein Kühlelement für Kühlflüssigkeit aufweist. Auf diese Weise kann das Blech aktiv gekühlt werden und eine störende Erwärmung durch Strahlung der Strahler verhindert werden.
Die optischen Elemente sind in der zweiten Variante als Lochblenden ausgebildet und in der zweiten Ebene ein Lochblenden-Array bilden, wobei gilt: M2 = M1 und wobei jedem Strahler genau eine Lochblende zugeordnet ist. Die jeweils zugeordnete Lochblende kann zentriert zum Strahler angeordnet sein. Bei einer solchen Lösung ergibt sich der Vorteil, dass eine gute Strahlenausbeute erreicht werden kann, insbesondre bei Einsatz eines Blaze-Gitters.
Die Lochblenden weisen in der zweiten Variante (Teil i) jeweils einen Durchmesser D (gemessen in der zweiten Ebene) und eine Tiefe T (gemessen senkrecht zur zweiten Ebene) auf, derart, dass für einen Abstrahlwinkel $\alpha$ gilt: tan

$$(\alpha) = \left( \frac{D/2}{d1 + T/2} \right).$$

Die Lochblenden sind in der zweiten Variante (Teil ii) innen jeweils mit einer Struktur versehen, welche das Begrenzen des maximalen Abstrahlwinkels $\alpha_{max}$ unterstützen.
Die Strukturen können jeweils ein sogenanntes Blaze-Gitter bilden, insbesondere ein Blaze-Gitter mit variablem Gitterlinien-Abstand und/oder variablem Blaze-Winkel.
Die Vorrichtung umfasst einen ersten Trockner zum Zwischenhärten der Tinte, wobei die Mehrzahl M1 von Strahlern und die Mehrzahl M2 von optischen Elementen dem ersten Trockner zugeordnet sind.
Die Vorrichtung kann einen, dem ersten Trockner in Bedruckstoff-Transportrichtung nachgeordneten, zweiten Trockner zum Enthärten der Tinte umfassen.
Es kann ein, der Mehrzahl M1 von Strahlern gegenüberstehender Spiegel vorhanden sein. Der Bedruckstoff kann zwischen der Ebene der Strahler und dem gegenüberliegenden Spiegel transportiert werden.
Es kann vorgesehen sein, dass eine Führungseinrichtung für den Bedruckstoff vorgesehen ist, z.B. eine Düsenfläche zum Ausstoßen von Blasluft, und dass die Führungseinrichtung verspiegelt ist und den Spiegel bildet

Figuren und Ausführungsbeispiele zur Erfindung

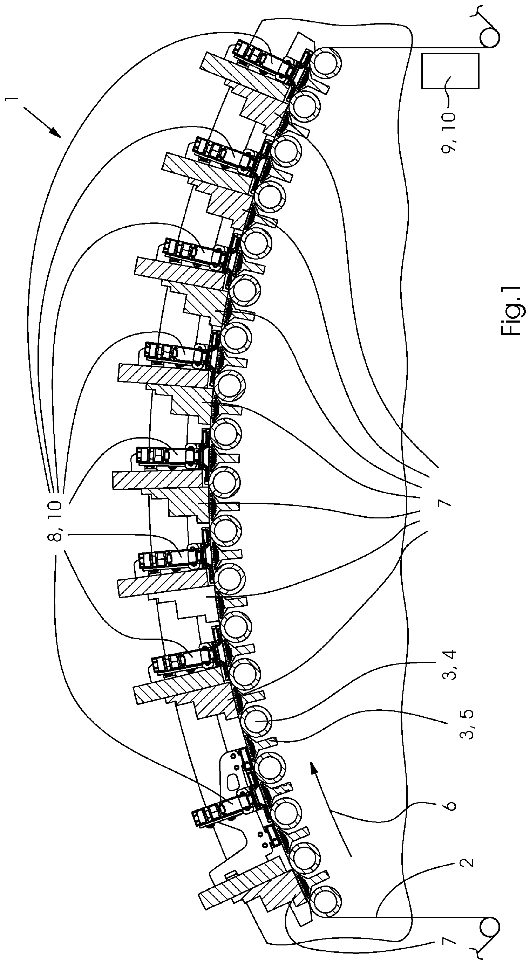

Die Erfindung und deren bevorzugte Weiterbildungen werden nachfolgend unter Bezug auf die Zeichnungen, das heißt die Figuren 1 bis 7, anhand bevorzugter Ausführungsbeispiele näher beschrieben. Einander entsprechende Merkmale sind dabei mit denselben Bezugszeichen versehen.
Die Figuren zeigen:

| | |
|---|---|
| Figur 1: | eine Schnittansicht einer Tinten-Druckmaschine; |
| Figur 2: | einen Trockner mit einer erfindungsgemäßen Vorrichtung; |
| Figuren 3a und 3b: | Teile der erfindungsgemäßen Vorrichtung; |
| Figur 4: | eine schematische Darstellung einer Öffnung oder einer Bohrung eines Lochblenden-Arrays; |
| Figur 5: | eine schematische Schnittansicht einer erfindungsgemäßen Ausführungsform mit einem Blaze- |

Gitter;

Figur 6:     eine nicht erfindungsgemäße Ausführungsform mit Linsen;

Figur 7:     eine nicht erfindungsgemäße Ausführungsform mit Spiegeln; und

Figur 8:     eine weitere (alternative) Ausführungsform mit Lochblenden.

Figur 1 zeigt eine Schnittansicht einer Tinten-Druckmaschine 1 mit mehreren erfindungsgemäßen Vorrichtungen zum Härten, insbesondere zum Zwischenhärten bzw. Pinnen, von UV-Tinte.

Die Figur 1 zeigt eine bahnverarbeitende Tintendruckmaschine für die industrielle Produktion mehrfarbiger Druckprodukte im Inkjet-Druckverfahren bei vorgegebener Druckauflösung, z.B. 1.200 x 1.200 dpi, und Verarbeitungsgeschwindigkeit, z.B. 50 Meter pro Minute. Die Maschine umfasst einen Rollen-Abwickler, ein Inkjet-Druckwerk für das bildgemäße Bedrucken der Bahn oder der Etiketten und einen Rollen-Aufwickler. Die Maschine kann auch zusätzliche Flexowerke umfassen, z.B. vor dem Druckwerk zum Auftragen von Primer oder Flexofarbe oder nach dem Druckwerk zum Lackieren. Weiterhin kann die Maschine Nachbearbeitungswerke zum Laminieren, Kaltfolienveredeln, Ausstanzen oder Entgittern umfassen. Die Bahn kann aus Papier, Kunststoff- oder Metallfolie bestehen. Das Druckwerk umfasst acht in Bogen-Transportrichtung aufeinander folgend angeordnete Druckstationen zum Übertragen von Tintentropfen, bevorzugt der Farben Weiß und KCMYOGV (Schwarz, Cyan, Magenta, Gelb, Orange, Grün und Violett). Jede Station umfasst eine im Wesentlichen quer zur Transportrichtung ausgerichtete Anordnung von im Druckbetrieb unbewegten Druckköpfen mit je einer Vielzahl an einzeln ansteuerbaren Druckdüsen zum Erzeugen der Tropfen ("Drop on demand" bzw. DOD). Die Stationen ermöglichen das seitenbreite Bedrucken einer Bahnseite im so genannten single-pass-Betrieb, d.h. die Bahnseite gelangt nur einmal in den Wirkbereich der Stationen. Die Tinten sind UV-härtende Tinten, deren Tropfen auf der Bahn bestrahlt werden, um Druckpunkte hoher Punktschärfe zu bilden, und enthalten als Farbmittel Farbstoffe. Eine UV-Einrichtung zum Endhärten umfasst bevorzugt LED-Strahler und dient dem Polymerisieren und somit dem Härten der Tinte. Die Maschine kann auch UV-Module zwischen den Druckstationen zum Pinnen der Tinten umfassen. Die Maschine umfasst auch eine Maschinensteuerung mit einem Rechner und einem auf dem Rechner laufenden Steuerprogramm, wobei der Rechner Teil eines nicht dargestellten Bedienpults sein kann. Ebenfalls nicht dargestellt sind eine Einrichtung zur Versorgung der Druckstationen mit Tinten und eine Einrichtung zur Reinigung der Druckköpfe.

Die Tintendruckmaschine 1 verarbeitet Bedruckstoff 2, insbesondere eine Bedruckstoffbahn, z.B. aus Papier oder Kunststofffolie, und kann der Herstellung von Etiketten dienen. Der Bedruckstoff 2 wird entlang einer Transportstrecke 3 geführt, insbesondere von Transportrollen 4 und vorzugsweise gekühlten und optional verspiegelten Führungsflächen 5. Der Transport erfolgt in eine Transportrichtung 6, welche insbesondere gekrümmt sein kann.

Entlang der Transportstrecke 3 sind mehrere Tinten-Druckwerke 7 angeordnet. Beispielhaft drucken diese die Farben Weiß, Cyan, Magenta, Yellow (Gelb), Schwarz, Grün, Orange und Violett. Die Druckgeschwindigkeit bzw. die Geschwindigkeit, mit der der Bedruckstoff durch die Maschine gefördert wird, kann im Bereich zwischen 10 und 150 Metern pro Minute relativ zu den Druckköpfen liegen.

Jedem Tinten-Druckkopf 7 ist in Transportrichtung 6 ein Trockner 8, insbesondere ein sogenannter Zwischentrockner, bzw. ein Trockner zum Pinnen, bevorzugt direkt nachgeordnet. Die Tinten unterschiedlicher Farben werden von diesen Trocknern bevorzugt direkt nach dem Auftragen jeweils gepinnt, d.h. nur teilweise gehärtet. Das Endhärten aller Tinten erfolgt abschließend mit einem weiteren Trockner 9, dem sogenannten Endtrockner. Dieser Endtrockner kann ein UV- oder Elektronenstrahl-Trockner sein.

Die Trockner 8 und 9, bevorzugt nur die Trockner 8, umfassen oder bilden jeweils eine erfindungsgemäße Vorrichtung 10 zum Härten von UV-Tinte auf dem Bedruckstoff 2.

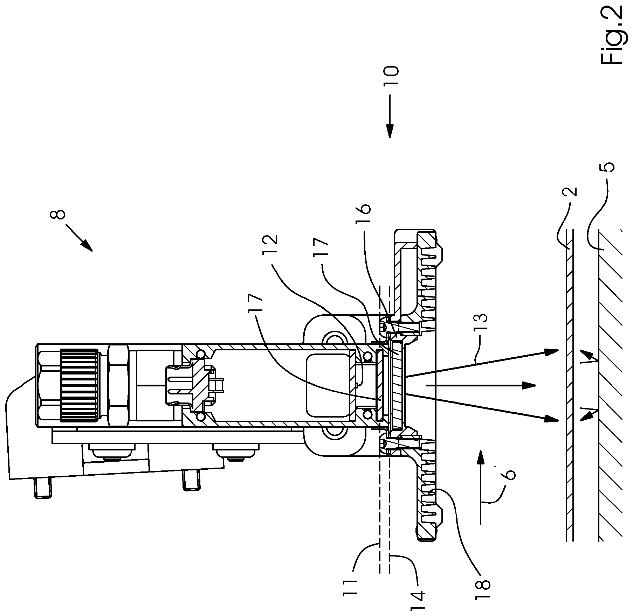

Figur 2 zeigt eine Schnittansicht eines Trockners 8, welcher eine erfindungsgemäße Vorrichtung 10 umfasst.

In einer ersten Ebene 11 sind mehrere Strahler 12 angeordnet, insbesondere eine Mehrzahl M1. In der Figur 2 ist nur ein Strahler erkennbar, da diese im Wesentlichen in einer Richtung senkrecht zur Papierebene benachbart zueinander angeordnet sind. Die Strahler sind jeweils bevorzugt als UV-LED-Strahlungsquellen ausgebildet und emittieren Strahlung 13, bevorzugt UV-Strahlung, in Richtung zur Oberfläche des Bedruckstoffs 2. Die Wellenlänge der Strahlung kann im Bereich zwischen 300 und 400 Nanometer liegen. Die Leistung der LEDs liegt bevorzugt zwischen 200 und 100.000 mW/cm$^2$.

Die LEDs sind bevorzugt derart nebeneinander (in einer Reihe quer zur Transportrichtung des Bedruckstoffs 2) als LED-Chips auf einer Leiterplatte angeordnet, dass deren jeweilige Strahlung zum Teil überlappt. Hierdurch wird die Zuverlässigkeit (bezüglich eines LED-Ausfalls) und die Homogenität der Anordnung bzw. deren Strahlung verbessert.

Für den Zusammenhang zwischen der Anzahl n überlappender LED-Bestrahlungsbereiche, dem gegenseitigen Abstand d der LED-Chips auf der Leiterplatte, dem Abstand h zwischen den virtuellen Punktquellen der LEDs und der Substratoberfläche, dem maximal erlaubten Strahlungswinkel θ gilt die folgende Beziehung:

$\frac{h}{d} = n/(2 * tan(\frac{\theta}{2}))$ . Dabei wurde die Länge des Überlappbereiches zwischen der ersten und der n-ten LED gleich d gesetzt, was einen nahtlosen Anschluss der Überlappungsbereiche ermöglicht.

Je nach Vorgabe bestimmter gewünschter Parameter kann die Wahl der noch offenen Parameter bzw. die Anordnung entsprechend den Vorgaben angepasst werden. Möchte man die Länge des Überlapp-Bereiches vorgeben, so kann in der obigen Beziehung z.B. der Parameter d (oder ein anderer Parameter) mit einer entsprechenden geometrischen Beziehung durch den Parameter Überlapplänge ersetzt werden.

Beispiel:

Für eine festgelegte gewünschte Anzahl von überlappenden LEDs (n), einen gewünschten maximal erlaubten Strahlungswinkel (θ) und einen gegebenen Abstand zwischen einzelnen LEDs (d), wird der zugehörige Abstand zwischen den virtuellen Punktquellen und der Substratoberfläche (h) entsprechend der oben genannten Beziehung festgelegt.

Abhängigkeit von h von d, n und θ ist: $\frac{h}{d} = n / (2 \tan\left(\frac{\theta}{2}\right))$ .

In einer zweiten Ebene 14 sind mehrere optische Elemente 15 angeordnet, insbesondere eine Mehrzahl M2. Diese sind in den folgenden Figuren im Detail dargestellt und können bevorzugt Lochblenden, Linsen oder Spiegel, insbesondere in sogenannter Array-Anordnung sein.

Die Vorrichtung 10 kann weiterhin bevorzugt einen (z.B. wechselbaren) Rahmen 16, eine (optionale) Glasplatte 17 zum Verhindern von Verschmutzungen dahinter befindlicher Teile und Lichtfallen 18 für die Strahlung 13 umfassen.

Der Trockner 8 kann eine weitere Glasplatte 17 direkt vor den Strahlern 12 umfassen.

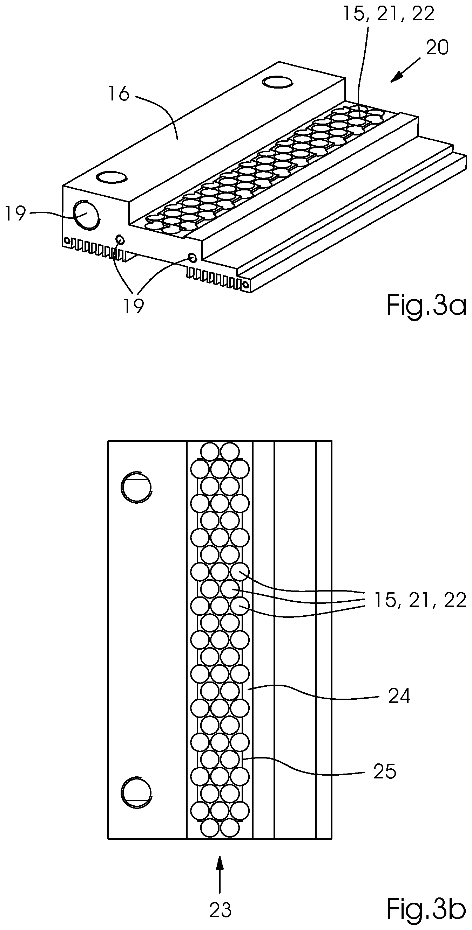

Die Figuren 3a und 3b zeigen Teile der erfindungsgemäßen Vorrichtung zum Härten gemäß einer ersten Ausführungsform jeweils in verschiedenen Ansichten.

Die perspektivische Ansicht der Figur 3a lässt den Rahmen 16 mit Kühlkanälen 19 erkennen. Ein Kühlen des Rahmens kann erforderlich sein, wenn es durch Absorption von Strahlung 13 zur Erwärmung des Rahmens kommt.

Figur 3a lässt auch ein Blech 20 mit mehreren Öffnungen 21, bevorzugt Bohrungen 21, erkennen, insbesondere eine Mehrzahl M2. Das Blech ist ein Metallblech, bevorzugt aus Aluminium. Die Bohrungen sind bevorzugt Zylinderbohrungen. Mittels der Kühlkanäle 19 des Rahmens 16 kann auch das Blech 20 gekühlt werden.

Die Draufsicht der Figur 3b zeigt das Blech 20 und die Öffnungen 21, welche bevorzugt wabenförmig bzw. in einem hexagonalen Raster angeordnet sind. Die Öffnungen bzw. Bohrungen bilden jeweils Lochblenden 22 als optische Elemente 15 und gemeinsam ein Lochblenden-Array 23.

Die Oberseite des Blechs 20, d.h. die den Strahlern 12 zugewandte Seite, kann bevorzugt eine Absorptionsschicht 24 umfassen, welche auftreffende Strahlung 13 absorbiert.

Die Bohrungen 21, d.h. die von diesen gebildeten Öffnungen, nehmen einen Großteil der Fläche des Blechs 20 ein: Bei der Fertigung des Lochblenden-Arrays 23 können die Bohrungen so dicht gesetzt werden, dass die verbleibenden Stege 25 zwischen den Bohrungen gerade noch eine ausreichende Festigkeit des Blechs gewähren. Die Absorptionsschicht 24 kann auf den Stegen angeordnet sein.

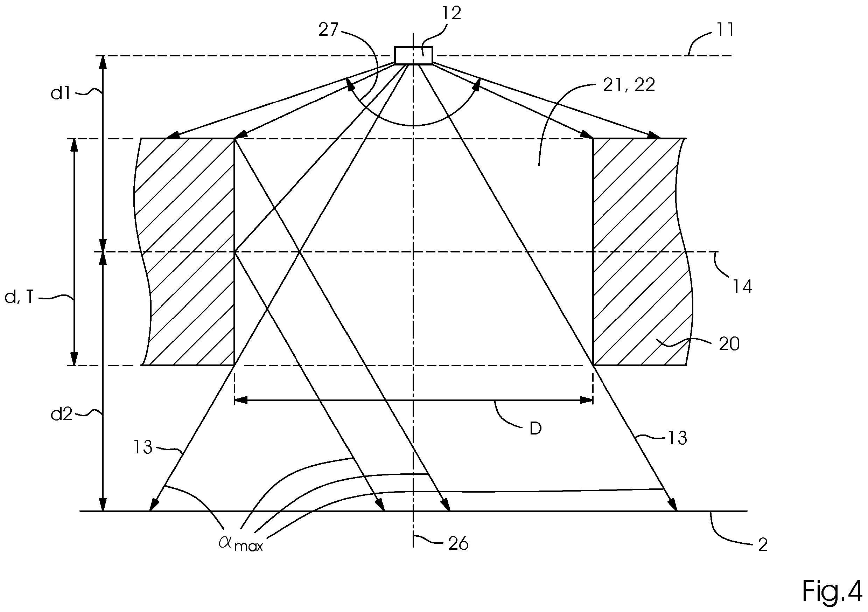

Figur 4 zeigt in schematischer Schnittansicht eine Öffnung oder Bohrung eines Lochblenden-Arrays 23.

Erkennbar sind (von "oben" nach "unten") ein Strahler 12 in der ersten Ebene 11, ein Metallblech 20 in der zweiten Ebene 14 und der Bedruckstoff 2. Das Blech 20 weist eine Dicke d auf. Gezeigt ist exemplarisch eine Bohrung 21 (der Mehrzahl M2 von Bohrungen) mit einem Durchmesser D und einer Tiefe T, welche der Blechdicke d entspricht.

Weiterhin zeigt Figur 4 das Lot 26, d.h. die Senkrechte zur ersten Ebene 11 und bevorzugt auch zur Ebene des Bedruckstoffs 2.

Der Strahler 12 ist ein LED-Strahler und strahlt seine (UV-) Strahlung 13 in einem großen Winkelbereich 27, insbesondere > 60°, ab. Erfindungsgemäß sollen jedoch nur Strahlen 13 mit einem begrenzten Abstrahlwinkel α (gegen das Lot gemessen) kleiner als ein vorgegebener maximaler Abstrahlwinkel $\alpha_{max}$ von 30° auf den Bedruckstoff 2 gelangen.

Bei einer Ausführungsform der Erfindung ist jedem Strahler 12 genau eine Lochblende 22 zugeordnet, d.h. insbesondere ist M1 = M2. Die Lochblende 22 sitzt dabei zentriert zum Strahler. Der Abstand d1 bezeichnet den Abstand der zweiten Ebene 14 von der ersten Ebene 11; der Abstand d2 bezeichnet den Abstand der Ebene des Bedruckstoffs 2 von der zweiten Ebene 14. d1 liegt bevorzugt im Bereich von 50 bis 300 mm.

Dann gilt:

$$\alpha_{max} = arctan = \left(\frac{D/2}{d1 + T/2}\right)$$

Der vorgegebene maximale Abstrahlwinkel $\alpha_{max}$ soll kleiner als 30 sein, d.h.

$$\alpha_{max} = arctan = \left(\frac{D/2}{d1 + T/2}\right) \leqq 30\,°$$

Hieraus lassen sich Konstruktionsbedingungen für D, T und d1 ableiten. Meist ist der Abstand d1 vorgegeben, die Blechdicke (bzw. T) lässt sich dann - bei vorgegebenem Durchmesser D - ermitteln. Beispielsweise können folgende Werte vorgegeben sein: D = 5,7 mm, T ungefähr 12 mm.

Bei dieser Ausführungsform bleiben alle Strahlen mit $\alpha > \alpha_{max}$ für das Härten unbenutzt, d.h. sie werden - bei entsprechender Beschichtung des Blechs und ggf. der Innenseiten der Bohrungen - absorbiert und erwärmen das Blech. Der Wirkungsgrad wird daher herabgesetzt.

Bei einer hinsichtlich des Wirkungsgrads verbesserten Ausführungsform sind die Innenseiten der Bohrungen mit Strukturen, insbesondere einem sogenannten Blaze-Gitter, versehen.

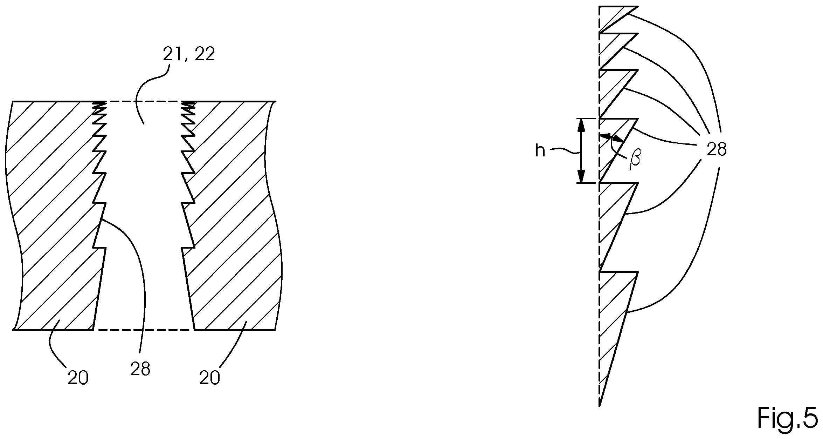

Figur 5 zeigt eine schematische Schnittansicht einer solchen verbesserten Ausführungsform mit einem Blaze-Gitter.

In der Figur ist links das Blech 20 mit der Bohrung 21 bzw. der Lochblende 21 dargestellt. Die Innenseite der Bohrung 21 ist mit einem Blaze-Gitter 28 versehen. Dieses weist verspiegelte, im Querschnitt keilförmige Strukturen 28 auf.

Die Strukturen 28 weisen Winkel $\beta$ und eine jeweilige Höhe h auf, wobei die Höhe h von "oben" (strahlerseitiges Ende) nach "unten" (bedruckstoffseitiges Ende) derart zunehmen, dass auf die Innenseite der Bohrung 21 auftreffende Strahlung 13 zum Bedruckstoff 2 hin orientiert wird, wobei wiederum gilt: $\alpha \leq \alpha_{max} \leq 30°$.

Alle an der Innenseite der Bohrung (mit Blaze-Gitter) reflektierten und gebeugten Strahlen 13 treffen auf den Bedruckstoff 2 mit einem Winkel $\alpha$ (gegen das Lot gemessen) von 30 ° auf. Auch kleinere Winkel als 30 sind möglich; hierzu muss das Blaze-Gitter entsprechend verändert werden ($\beta$ und h müssen entsprechend angepasst werden). Oder anders: durch entsprechend gefertigte Blaze-Gitter kann der Winkel $\alpha$ der Strahlen 13 zum Lot eingestellt werden.

Ein solches Blaze-Gitter kann z.B. aus Kunststoff durch Abformen und anschließendes Verspiegeln hergestellt werden.

Die Innenwand des zylindrischen Lochs stellt ein Blaze-Gitter mit sich kontinuierlich verändernden Gitterkonstante d und Blaze-Winkel $\beta$ bzw. $\theta B$ dar.

Durch die Forderung, dass der am Blaze-Gitter reflektierte und gebeugte Strahl zusammenfallen ergibt sich für die erste Beugungsordnung eine Abhängigkeit zwischen Gitter-Konstante, Blaze-Winkel, Einfallwinkel gegen das Wandlot und Wellenlänge des verwendeten Lichts:

$$\theta B = \frac{1}{2}\left\{\alpha - arcsin\left(\sin\alpha - \frac{\lambda}{d}\right)\right\}$$

Für einen gewünschten Ausfallwinkel $\beta$ gegen das Wandlot ergibt sich für den Verlauf von Gitterkonstante und Blaze-Winkel entlang der Loch-Innenwand entsprechend dem zugehörigen Verlauf des Einfallwinkels $\alpha$ gegen das Wandlot:

$$d = \frac{\lambda}{\sin\alpha + \sin\beta}$$

Es folgt:

$$\Theta B = \frac{\alpha + \beta}{2}$$

Die Wahl des gewünschten Ausfallwinkels $\beta$ ist ein Kompromiss zwischen möglichst hohem Nutzanteil der reflektierten/gebeugten Strahlung (möglichst großer Ausfallwinkel gegen LED-Lot, kleiner Ausfallwinkel gegen Wandlot) und der Beschränkung des Ausfallwinkels gegen LED-Lot auf einen Höchstwert (im obigen Beispiel 30°).

Die Wahl des Abstandes zwischen Lichtquelle und Array-Oberseite, sowie des Lochdurchmessers legt den maximalen Strahlwinkel gegen LED-Lot fest, der gerade noch ausgerichtet wird. Alle Strahlen mit größerem Strahlwinkel treffen auf die Oberseite des Arrays außerhalb des der Lichtquelle zugeordneten Lochs. Je nach Abstrahlcharakteristik der Lichtquelle kann dies für einen mehr oder weniger großen Winkelbereich in Kauf genommen werden.

Die Wahl des Abstandes zwischen Lichtquelle und Array-Unterseite legt den minimalen Strahlwinkel gegen LED-Lot fest, der gerade noch ausgerichtet wird. Alle Strahlen mit kleinerem Strahlwinkel treffen direkt auf das Substrat (im obigen Beispiel 30°).

Fertigung des Loch-Arrays mit Blaze-Strukturen:

Herstellung von Master-Formen durch Abformen von (stereo-) lithographisch erzeugten Resist-Strukturen . Anschließend 2D-Folienprägen oder -Foliengießen mit Hilfe einer Master-Form und Verspiegelung der Folie durch Aufsputtern einer Metallschicht. Auskleidung der Loch-Innenflächen mit der Folie.

Das Loch-Array selbst kann durch Bohren einer Platte oder durch Spritzgießen in einer Master-Form erzeugt werden.

Zuordnung der Löcher zu den LEDs:

Vorzugsweise sollte jeder LED ein Loch in der oben beschriebenen Weise zugeordnet sein. Dadurch ist gewährleistet, dass die Strahlung radial auf die Innen wände der Löcher trifft. Dies bedeutet dass 100% der auf die Innenwand treffenden Strahlung (abzüglich Abschattung durch Stufe) in dem gewünschten Ausfallwinkel ausgerichtet werden.

Alternativ kann jedoch auch ein Loch-Array verwendet werden, bei dem Strahlung aus mehreren LEDs in jeweils ein Loch fällt (ähnlich dem absorbierenden Fall). Dies erlaubt eine größere Freiheit bezüglich der Wahl des Abstands der LED zur Array-Oberseite, der Lochanordnung im Array und des Loch-Innendurchmessers. Allerdings geht ein gewisser Anteil der Strahlung für die Ausrichtung dadurch verloren, dass die Strahlen in der Regel nicht radial auf die Innenwand treffen und deshalb nur die radiale

Komponente ausgerichtet wird. Das Design des Loch-Arrays ist bevorzugt so auszuführen, dass der radiale Strahlenanteil der in ein Loch fallenden Strahlung möglichst groß wird.

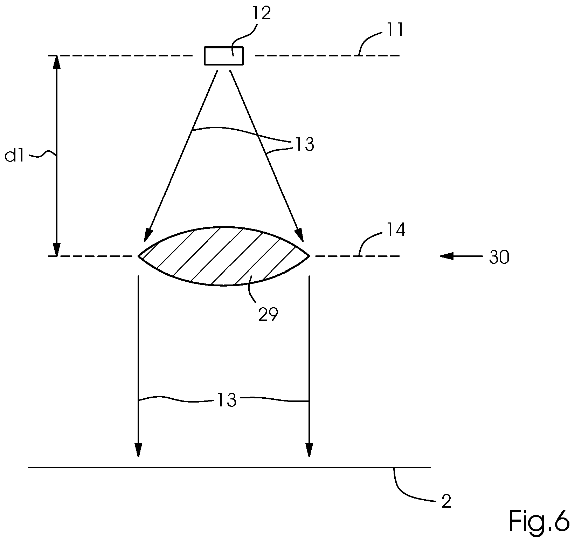

Figur 6 zeigt schematisch eine nicht erfindungsgemäße Ausführungsform der Erfindung mit Linsen.

Bei dieser Ausführungsform ist jedem Strahler 12 der Ebene 11 genau eine Linse 29, bevorzugt eine Mikrolinse, zugeordnet, welche die Strahlung 13 bündelt. Benachbarte Linsen 29 der Ebene 14 bilden bevorzugt eine Mikrolinsen-Array 30. Eine solche Anordnung hat den Vorteil, dass weniger Strahlung absorbiert wird und daher weniger oder gar keine Kühlung erforderlich ist. Der Wirkungsgrad ist gegenüber der Lochblenden-Lösung verbessert.

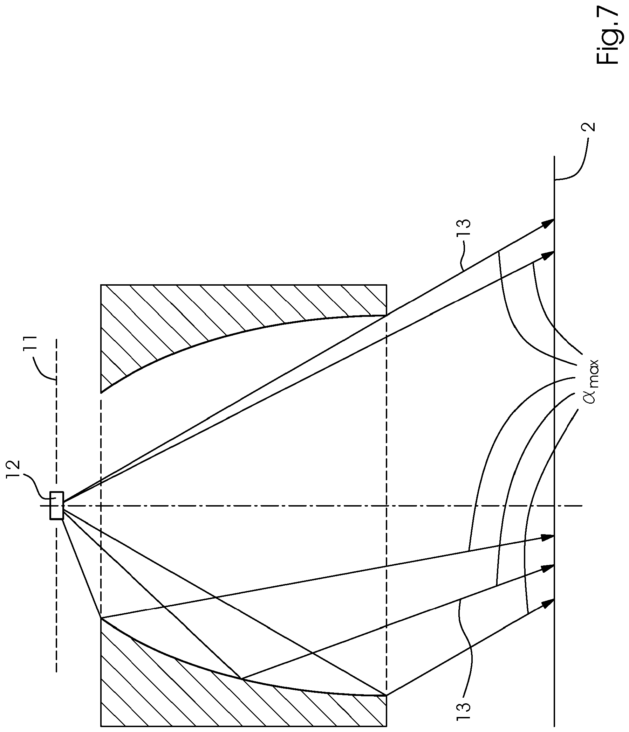

Figur 7 zeigt schematisch ebenfalls eine nicht erfindungsgemäße Ausführungsform, jedoch mit Spiegeln statt Linsen.

Bei dieser Ausführungsform ist jedem Strahler 12 der Ebene 11 genau ein Spiegel 31, bevorzugt ein Ellipsoid-Spiegel, zugeordnet. Der Spiegel ist dabei so geformt, dass alle direkte Strahlung 13 und alle gespiegelte Strahlung mit einem Winkel $\alpha \leq \alpha_{max} \leq 30$ auf den Bedruckstoff 2 trifft. Alle an der Innenwand (des Spiegels) reflektierten Strahlen 13 haben einen Winkel $\alpha$ (gegen das Lot gemessen) < 30°. Benachbarte Spiegel 31 bilden bevorzugt ein Spiegel-Array 32.

Die Innenwand des Lochs ist glatt und verspiegelt und stellt einen Ausschnitt aus einem Ellipsoid dar.

Das Loch ist einer bestimmten LED zugeordnet die sich im einen Brennpunkt des Ellipsoids befindet.

Sowohl die geometrischen Parameter des Ellipsoids als auch der für die Innenwand verwendete Ausschnitt des Ellipsoids sind so zu wählen, dass der gewünschte maximale Einfallwinkel gegen LED-Lot für direkte und reflektierte Strahlung auf dem Substrat nicht überschritten wird.

Unterschied zu zylindrischen Löchern mit Blaze-Innenwand:

Die auf das Substrat treffenden reflektierten Strahlen haben beim Ellipsoid verschiedene Auftreffwinkel kleiner als 30°.

Die Wahl des Abstandes zwischen Lichtquelle und Array-Oberseite (und der damit sich ergebende obere Loch-Innendurchmesser legt den maximalen Strahlwinkel gegen LED-Lot fest, der gerade noch ausgerichtet wird. Alle Strahlen mit größerem Strahlwinkel treffen auf die Oberseite des Arrays außerhalb des der Lichtquelle zugeordneten Lochs. Je nach Abstrahlcharakteristik der Lichtquelle kann dies für einen mehr oder weniger großen Winkelbereich in Kauf genommen werden.

Die Wahl des Abstandes zwischen Lichtquelle und Array-Unterseite legt den minimalen Strahlwinkel gegen LED-Lot fest, der gerade noch ausgerichtet wird. Alle Strahlen mit kleinerem Strahlwinkel treffen direkt auf das Substrat (im Beispiel 30°).

Fertigung des Loch-Arrays mit Ellipsoid-Form:

Herstellung (mikromechanisch) von ellipsoidförmigen Master-Formen zum Bohren/Schleifen/Polieren der Löcher. Wird in eine Metallplatte gebohrt/geschliffen/poliert, so erübrigt sich evtl. eine nachgelagerte Verspiegelung durch Aufsputtern oder Aufdampfen einer Metallschicht.

Das Loch-Array kann auch durch Spritzgießen in einer Master-Form erzeugt werden.

Zuordnung der Löcher zu den LEDs:

Jedes Loch ist einer bestimmten LED zugeordnet die sich im einen Brennpunkt des Ellipsoids befindet.

Nachteilig an dieser Ausführungsform ist, dass die LESs und die Spiegel sehr exakt zueinander angeordnet werden müssen. Es wird daher die oben beschriebene Ausführungsform mit Linsen gegenüber der Ausführungsform mit Spiegeln bevorzugt.

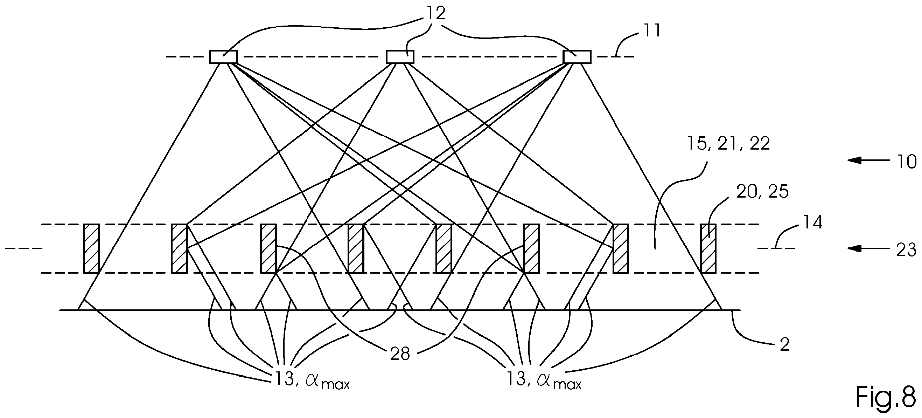

Figur 8 zeigt eine weitere (alternative) Ausführungsform mit einer Mehrzahl M1 von Strahlern 12 in einer ersten Ebene 11 und einem Lochblenden-Array 23 mit einer Mehrzahl M2 von Lochblenden 22 in einer zweiten Ebene 14, wobei M2>M1. Die Lochblenden sind innenwandig jeweils mit einem (nicht dargestellten) Blaze-Gitter 28 versehen, so dass der jeweilige maximale Abstrahlwinkel $\alpha_{max}$ der Strahlen 13 der Strahler auf $\alpha_{max} \leq 30°$ begrenzt wird. Es treffen somit nur Strahlen 13 in einem Winkelbereich zwischen 0° und 30° und zwischen 0° und -30° auf den Bedruckstoff 2.

**Bezugszeichenliste**

| | |
|---|---|
| 1 | Tinten-Druckmaschine |
| 2 | Bedruckstoff, insbesondere Bahn |
| 3 | Transportstrecke |
| 4 | Transportrollen |
| 5 | Transportvorrichtung für den Bedruckstoff, gegebenenfalls verspiegelt |
| 6 | Transportrichtung des Bedruckstoffs |
| 7 | Tinten-Druckköpfe |
| 8 | Trockner, insbesondere Zwischentrockner |
| 9 | Trockner, insbesondere Endtrockner |
| 10 | erfindungsgemäße Vorrichtung |
| 11 | erste Ebene |
| 12 | Strahler bzw. UV-LED-Strahlungsquellen |
| 13 | Strahlung/Strahlen, insbesondere UV-Strahlung/Strahlen |
| 14 | zweite Ebene |
| 15 | optische Elemente |
| 16 | Rahmen |
| 17 | Glasplatten |
| 18 | Lichtfallen |
| 19 | Kühlkanäle |
| 20 | Blech |
| 21 | Öffnungen, insbesondere Bohrungen |
| 22 | Lochblenden |
| 23 | Lochblenden-Array |
| 24 | Absorptionsschicht |
| 25 | Stege |
| 26 | Lot bzw. Senkrechte zur ersten Ebene |
| 27 | Winkelbereich |
| 28 | Strukturen/Blaze-Gitter |
| 29 | Linsen, insbesondere Mikrolinsen |
| 30 | Linsen-Array |
| 31 | Spiegel, insbesondere Ellipsoid-Spiegel |
| 32 | Spiegel-Array |

| | |
|---|---|
| d | Dicke (des Blechs) |
| D | Durchmesser (der Bohrung) |
| T | Tiefe (der Bohrung) |
| d1 | Abstand |
| d2 | Abstand |
| $\alpha$ | Winkel |
| $\alpha_{max}$ | maximaler Winkel |
| $\beta$ | Winkel der Struktur (Blaze-Gitter) |
| h | Höhe der Struktur (Blaze-Gitter) |

**Patentansprüche**

1. Vorrichtung zum Härten von UV-Tinte auf einem Bedruckstoff, umfassend eine Mehrzahl M1 von Strahlern (12), welche als UV-LED-Strahlungsquellen ausgebildet sind, wobei die Vorrichtung eine Mehrzahl M2 von optischen Elementen (15) umfasst, welche derart ausgebildet und angeordnet sind, dass der jeweilige maximale Abstrahlwinkel $\alpha_{max}$ der Strahler auf $\alpha_{max} \leqq 30$ begrenzt wird, und die Vorrichtung (10) einen ersten Trockner (8) zum Zwischenhärten der Tinte umfasst, wobei die Mehrzahl M1 von Strahlern (12) und die Mehrzahl (M2) von optischen Elementen (15) dem ersten Trockner (8) zugeordnet sind, und wobei die Strahler (12) im Wesentlichen in einer ersten Ebene (11) angeordnet sind, die Strahler (12) in der ersten Ebene (11) benachbart zueinander angeordnet sind, und die optischen Elemente (15) im Wesentlichen in einer zur ersten Ebene (11) parallelen, zweiten Ebene (14) angeordnet sind,
**dadurch gekennzeichnet,**
**dass** die optischen Elemente (15) als Lochblenden ausgebildet sind und in der zweiten Ebene (14) ein Lochblenden-Array (23) bilden, wobei gilt: M2 > M1 und wobei jedem Strahler (12) mehrere Lochblenden (15) zugeordnet sind und wobei die Lochblenden (15) innenwandig jeweils mit einem Blaze-Gitter (28) versehen sind.

2. Vorrichtung zum Härten von UV-Tinte auf einem Bedruckstoff, umfassend eine Mehrzahl M1 von Strahlern (12), welche als UV-LED-Strahlungsquellen ausgebildet sind, wobei die Vorrichtung eine Mehrzahl M2 von optischen Elementen (15) umfasst, welche derart ausgebildet und angeordnet sind, dass der jeweilige maximale Abstrahlwinkel $\alpha_{max}$ der Strahler auf $\alpha_{max} \leqq 30$ begrenzt wird, und die Vorrichtung (10) einen ersten Trockner (8) zum Zwischenhärten der Tinte umfasst, wobei die Mehrzahl M1 von Strahlern (12) und die Mehrzahl (M2) von optischen Elementen (15) dem ersten Trockner (8) zugeordnet sind, und wobei die Strahler (12) im Wesentlichen in einer ersten Ebene (11) angeordnet sind, die Strahler (12) in der ersten Ebene (11) benachbart zueinander angeordnet sind, und die optischen Elemente (15) im Wesentlichen in einer zur ersten Ebene (11) parallelen, zweiten Ebene (14) angeordnet sind,
**dadurch gekennzeichnet,**
**dass** die optischen Elemente (15) als Lochblenden ausgebildet sind und in der zweiten Ebene (14) ein Lochblenden-Array (23) bilden, wobei gilt: M2 = M1 und wobei jedem Strahler (12) genau eine Lochblende (15) zugeordnet ist, und wobei i) die Lochblenden (15) jeweils einen Durchmesser D und eine Tiefe T aufweisen und die zweite Ebene (14) einen Abstand d1 von der ersten Ebene (11) aufweist, derart, dass für einen Abstrahlwinkel $\alpha$ gilt: $\tan(\alpha) = \left(\frac{D/2}{d1+T/2}\right)$, und/oder ii) dass die Lochblenden (15) innen jeweils mit Strukturen (28) versehen sind, welche das Begrenzen des maximalen Abstrahlwinkels $\alpha_{max}$ unterstützen.

3. Vorrichtung nach Anspruch 1,
**dadurch gekennzeichnet,**
**dass** das Lochblenden-Array (23) als ein mit Bohrungen (21) versehenes Blech (20) ausgebildet ist.

4. Vorrichtung nach Anspruch 3,
**dadurch gekennzeichnet,**
**dass** das Blech (20) mit einer Absorptionsschicht (24) versehen ist.

5. Vorrichtung nach Anspruch 4,
**dadurch gekennzeichnet,**
**dass** das Blech (20) an einem Rahmen (16) angeordnet ist, welcher wenigstens einen Kühlkanal (19) für Kühlflüssigkeit aufweist.

6. Vorrichtung nach Anspruch 2,
**dadurch gekennzeichnet,**
**dass** die Strukturen (28) jeweils ein Blaze-Gitter (28) bilden.

7. Vorrichtung nach einem der vorhergehenden Ansprüche,
**dadurch gekennzeichnet,**
**dass** die Vorrichtung (10) einen, dem ersten Trockner (8) in Bedruckstoff-Transportrichtung (6) nachgeordneten, zweiten Trockner (9) zum Härten der Tinte umfasst.

8. Vorrichtung nacheinem der vorhergehenden Ansprüche,

**dadurch gekennzeichnet,**
**dass** ein, der Mehrzahl M1 von Strahlern (12) gegenüberstehender, Spiegel (5) vorhanden ist.

9. Vorrichtung nach Anspruch 8,
**dadurch gekennzeichnet,**
**dass** eine Führungseinrichtung (5) für den Bedruckstoff (2) vorgesehen ist und dass die Führungseinrichtung verspiegelt ist und den Spiegel (5) bildet.

## Claims

1. Device for curing UV ink on a printing material, the device comprising a plurality M1 of radiation sources (12), which are embodied as UV-LED radiation sources, and a plurality M2 of optical elements (15), which are embodied and arranged in such a way that the respective maximum angle of radiation $\alpha_{max}$ of the radiation sources is limited to $\alpha_{max} \leq 30°$, and a first dryer (8) for pinning the ink, wherein the plurality M1 of radiation sources (12) and the plurality (M2) of optical elements (15) are assigned to the first dryer (8) and wherein the radiation sources (12) are essentially disposed in a first plane (11), the radiation sources (12) are disposed adjacent to one another in the first plane (11), and the optical elements (15) are essentially disposed in a second plane (14) parallel to the first plane (11), **characterized** **in that** the optical elements are embodied as apertures and form an aperture array (23) in the second plane (14), wherein M2 > M1 and several apertures (15) are assigned to every radiation source (12) and wherein the interior wall of each aperture (15) is equipped with a blazed grating (28).

2. Device for curing UV ink on a printing material, the device comprising a plurality M1 of radiation sources (12), which are embodied as UV-LED radiation sources, and a plurality M2 of optical elements (15), which are embodied and arranged in such a way that the respective maximum angle of radiation $\alpha_{max}$ of the radiation sources is limited to $\alpha_{max} \leq 30°$, and a first dryer (8) for pinning the ink, wherein the plurality M1 of radiation sources (12) and the plurality of optical elements (15) are assigned to the first dryer (8) and wherein the radiation sources (12) are essentially disposed in a first plane (11), the radiation sources (12) are disposed adjacent to one another in the first plane (11), and the optical elements (15) are essentially disposed in a second plane (14) parallel to the first plane (11), **characterized** **in that** the optical elements are embodied as apertures and form an aperture array (23) in the second plane (14), wherein M2 = M1 and wherein every radiation source (12) is assigned precisely one aperture (15), and i) wherein each one of the apertures (15) has a diameter D and a depth T and the second plane (14) is at a distance d1 from

$$\tan(\alpha) = \left(\frac{D/2}{d1 + T/2}\right)$$

the first plane (11) in such a way that the equation applies and/or ii) wherein the interior of the apertures (15) is provided with structures (28) which assist in limiting the maximum angle of radiation $\alpha_{max}$.

3. Device according to claim 1,
**characterized**
**in that** the aperture array (23) is embodied as a plate (20) provided with bores (21).

4. Device according to claim 3,
**characterized**
**in that** the plate (20) is provided with an absorption layer (24).

5. Device according to claim 4,
**characterized**
**in that** the plate (20) is disposed on a frame (16) which includes at least one cooling duct (19) for a cooling liquid.

6. Device according to claim 2,
**characterized**
**in that** each one of the structures (28) forms a blazed grating (28).

7. Device according to any one of the preceding claims,
**characterized**
**in that** the device (10) comprises a second dryer (9) for curing the ink, the second dryer (9) disposed downstream of the first dryer (8) in the direction of printing material transport (6).

8. Device according to any one of the preceding claims,
**characterized**
**in that** a mirror (5) located opposite the plurality M1 of radiation sources (12) is provided.

9. Device according to claim 8,
**characterized**
**in that** a guide device (5) is provided for the printing material (2) and in that the guide device has a reflective coating and forms the mirror (5).

**Revendications**

1. Dispositif de durcissement de l'encre UV sur un support d'impression, comprenant une pluralité M1 de tubes (12) qui sont conçus comme des sources de rayonnement LED UV, le dispositif comprenant une pluralité M2 d'éléments optiques (15) conçus et disposés de telle sorte que l'angle de rayonnement maximal respectif des tubes $\alpha_{max}$ est limité à $\alpha_{max} \leq 30°$, et le dispositif (10) comprend un premier sécheur (8) pour le durcissement intermédiaire de l'encre, pour lequel la pluralité M1 de tubes (12) et la pluralité (M2) d'éléments optiques (15) sont associées au premier sécheur (8), et pour lequel les tubes (12) sont disposés essentiellement dans un premier plan (11), les tubes (12) sont disposés dans le premier plan (11) de manière adjacente les uns aux autres, et les éléments optiques (15) sont disposés essentiellement dans un deuxième plan (14) parallèle au premier plan (11),
**caractérisé en ce**
**que** les éléments optiques (15) sont réalisés sous forme de masques perforés et forment dans le deuxième plan (14) une matrice de masques perforés (23), pour lequel on a : M2 > M1 et pour lequel plusieurs masques perforés (15) sont associés à chaque tube (12) et les masques perforés (15) sont respectivement pourvus d'un réseau blazé (28) sur leur paroi intérieure.

2. Dispositif de durcissement de l'encre UV sur un support d'impression, comprenant une pluralité M1 de tubes (12) qui sont conçus comme des sources de rayonnement LED UV, le dispositif comprenant une pluralité M2 d'éléments optiques (15) conçus et disposés de telle sorte que l'angle de rayonnement maximal respectif des tubes $\alpha_{max}$ est limité à $\alpha_{max} \leq 30$ et le dispositif (10) comprend un premier sécheur (8) pour le durcissement intermédiaire de l'encre, pour lequel la pluralité M1 de tubes (12) et la pluralité (M2) d'éléments optiques (15) sont associées au premier sécheur (8), et pour lequel les tubes (12) sont disposés essentiellement dans un premier plan (11), les tubes (12) sont disposés dans le premier plan (11) de manière adjacente les uns aux autres, et les éléments optiques (15) sont disposés essentiellement dans un deuxième plan (14) parallèle au premier plan (11),
**caractérisé en ce**
**que** les éléments optiques (15) sont réalisés sous forme de masques perforés et forment dans le deuxième plan (14) une matrice de masques perforés (23), pour lequel on a : M2 = M1 et pour lequel un masque perforé (15) est associé avec précision à chaque tube (12), et pour lequel i) les masques perforés (15) présentent chacun un diamètre D et une profondeur T et le deuxième plan (14) présente une distance d1 par rapport au premier plan (11), de sorte que pour un angle de rayonnement a, on a :

$$\tan(\alpha) = \left(\frac{\frac{D}{2}}{d1+\frac{T}{2}}\right)$$

, et/ou ii) **en ce que** les masques perforés (15) sont respectivement pourvus intérieurement de structures (28) qui contribuent à limiter l'angle de rayonnement maximal $\alpha_{max}$.

3. Dispositif selon la revendication 1,
**caractérisé en ce**
**que** la matrice de masques perforés (23) est réalisée sous la forme d'une tôle (20) pourvue de trous (21).

4. Dispositif selon la revendication 3,
**caractérisé en ce**
**que** la tôle (20) est dotée d'une couche d'absorption (24).

5. Dispositif selon la revendication 4,
**caractérisé en ce**

que la tôle (20) est montée sur un cadre (16) qui présente au moins un canal de refroidissement (19) pour le liquide de refroidissement.

6. Dispositif selon la revendication 2,
   **caractérisé en ce**
   **que** les structures (28) forment chacune un réseau blazé (28).

7. Dispositif selon l'une des revendications précédentes,
   **caractérisé en ce**
   **que** le dispositif (10) comprend un deuxième sécheur (9) pour le durcissement de l'encre, disposé en aval du premier sécheur (8) dans le sens de transport (6) du support d'impression.

8. Dispositif selon l'une des revendications précédentes,
   **caractérisé en ce**
   **qu'**il existe un miroir (5) faisant face au grand nombre M1 de tubes (12).

9. Dispositif selon la revendication 8,
   **caractérisé en ce**
   **qu'**un dispositif de guidage (5) est prévu pour le support d'impression (2) et que le dispositif de guidage est réfléchissant et constitue le miroir (5).

Fig.1

EP 3 718 777 B1

Fig.2

Fig.3a

Fig.3b

Fig.4

EP 3 718 777 B1

Fig.5

Fig.6

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03096387 A2
- JP 2012096377 A
- EP 3239763 A1
- US 20060066703 A1
- US 20130286060 A1
- US 20050190248 A1